# EUROPEAN PATENT SPECIFICATION

(11) **EP 0 668 023 B1**
(45) Date of publication and mention of the grant of the patent: **28.10.1998**
(21) Application number: 95300934.7
(22) Date of filing: 15.02.1995
(51) Int. Cl.: A23J 3/16, A23J 3/22, A23L 1/20

(54) **Process for preparing sheet-like soybean protein foods**
Verfahren zur Herstellung von blattförmigen Sojaeiweissprodukten
Procédé pour la préparation d'aliments à base de protéine de soja en forme de feuille

(30) Priority: 22.02.1994 JP 24263/94
(43) Date of publication of application: 23.08.1995
(73) Proprietor: FUJI OIL COMPANY, LIMITED, Osaka-shi, Osaka-fu 542 (JP)
(72) Inventor: Akazaki, Kenichi, Izumisano-shi, Osaka-fu (JP); Tatsubo, Hirokazu, Yao-shi, Osaka-fu (JP)
(74) Representative: Baverstock, Michael George Douglas

(56) References cited:
- PATENT ABSTRACTS OF JAPAN vol. 14 no. 439 (C-761) ,19 September 1990 & JP-A-02 171156 (SHICHIRO NIWANO) 2 July 1990,
- DATABASE WPI Week 7819 Derwent Publications Ltd., London, GB; AN 78-34447A & JP-A-53 034 950 (MEIJI KK) , 31 March 1978
- DATABASE WPI Week 9208 Derwent Publications Ltd., London, GB; AN 92-062341 & KR-B-9 008 212 (JUNG FOOD CO.) , 6 November 1990
- PATENT ABSTRACTS OF JAPAN vol. 9 no. 175 (C-292) ,19 July 1985 & JP-A-60 047647 (TOUYOU SUISAN KK) 15 March 1985,
- FOOD SCIENCE TECHNOLOGY ABSTRACTS AN-73(07):G0359 International Food Information Service Berkshire Reading, GB & UP-TO-DATE FOOD PROCESSING (SHOKUHIN KAIHATSU), vol. 7,no. 11, 1972 pages 32-41, H. TSUYUKI ET AL. 'Swelling and drying of soybean protein by microwave heating'
- DATABASE WPI Week 8539 Derwent Publications Ltd., London, GB; AN 78-64351A & JP-B-60 038 100 (KIBUN KK) , 30 August 1985
- DATABASE WPI Week 8630 Derwent Publications Ltd., London, GB; AN 86-194580 & JP-A-61 128 842 (QP TAMAGO KK ET AL.) , 16 June 1986
- DATABASE WPI Week 9032 Derwent Publications Ltd., London, GB; AN 90-243871 & JP-A-02 171 155 (S. NIWANO) , 2 July 1990

## Description

The present invention relates to a process for preparing sheet-like soybean protein foods, which have fine porous structures and slightly swollen appearances.

Many kinds of sheet-like foods made from proteins have been known. They can be classified into non-swollen film type foods such as "yuba (membrane-like Japanese traditional soybean protein food)" and edible films and swollen type foods such as "aburaage (fried soybean curd)".

As for methods of swelling, frying (heating in oil) and microwave heating are known.

Frying is a method wherein heat conducts from the outside to the inside of food materials by heating outside. In fried food materials, not only does the oil ooze out of the materials, but also fried products have cavities therein and swollen appearances.

Microwave heating is a method which heats the inside of materials by an electromagnetic wave. Compared with frying which heats the outside of the materials, microwave heating is better in that quick inside heating can be obtained. The following microwave heating methods, most of which are used as a means for drying, have been known.

For example, JP-B 60-38100 discloses a process for preparing foods having a yuba-like structure, which are swollen to spongy form by high-frequency heating to form spongy materials. However, there is no disclosure of intermittent irradiation.

JP-A 61-128842 discloses sheet-like foods and microwave heating for heat coagulation drying. However, there is no disclosure of intermittent irradiation.

JP-A 2-171155 discloses a process for preparing membrane-like foods. However, microwave heating is used only for heat-drying and there is no disclosure of intermittent irradiation.

The present inventors have studied intensively the preparation of sheet-like soybean protein foods which have slightly swollen appearances and fine porous structures. As a result, it has been found that the desired sheet-like soybean protein foods can be prepared by alternately repeating swelling and shrinking of hydrates or emulsions of soybean proteins (hereinafter referred to as a soybean protein raw material mixture) a plurality of times. Further, it has been found that the final sheet-like soybean protein foods can be prepared by intermittent irradiation by microwave.

Thus, one object of the present invention is to provide a process for preparing sheet-like soybean protein foods which have slightly swollen appearances and fine porous structures. This object as well as other objects and advantages of the present invention will become apparent to those skilled in the art from the following description.

According to the present invention, there is provided a process for preparing sheet-like soybean protein foods which comprises molding a soybean protein raw material mixture into a sheet and irradiating it intermittently by microwave.

The present invention is different from the above known microwave heating methods in that microwave irradiation is carried out intermittently, and that sheet-shaped soybean protein foods thus obtained have slightly swollen appearances and fine porous structures.

The soybean protein raw material mixture used in the present invention is a hydrate or an emulsion of soybean proteins.

Soybean proteins used in the present invention can be obtained by extracting soybeans or defatted soybeans as raw materials with water. Such soybean proteins may be, for example, isolated soybean proteins, condensed soybean proteins, soybean milk powders, or partial hydrolyzates thereof. Particularly, isolated soybean proteins are preferred.

A hydrate of soybean proteins can be used in the form of a paste prepared by adding water to soybean proteins and mixing or kneading the mixture. Normally, the amount of water to be used is 2.5 to 6 parts by weight, preferably 2.8 to 5.5 parts by weight, more preferably 3 to 5 parts by weight per one part by weight of soybean proteins, though it can be varied according to the particular kind of soybean proteins and their gel-forming abilities.

An emulsion of soybean proteins can be prepared by mixing or kneading soybean proteins, water and an oil for example by a silent cutter. The oil to be used is not specifically limited and any known oil can be used. Examples of known oils include edible vegetable oils such as soybean oil, safflower oil, rapeseed oil, sesame oil, corn oil and cotton seed oil, palm oil and coconut oil, edible animal oils such as fish oil, fractionated oils thereof and mixtures of these oils.

The ratio of soybean proteins, water and oil can be varied according to the particular kind of soybean proteins and their emulsifying abilities. Normally, 2.5 to 6 parts by weight of water and 0.1 to 2 parts by weight of the oil are suitably used per one part by weight of soybean proteins.

For improving moldability of the soybean protein raw material mixture, casein can be used. In addition, food additives such as coloring agents, flavors, seasonings and salts can be added.

For molding the soybean protein raw material mixture into a sheet, either batch molding or continuous extrusion molding can be used. Normally, a continuous extruder is suitable for industrial use.

Suitably, the soybean protein raw material mixture is molded into a sheet of 0.1 to 20 mm, preferably 0.5 to 10 mm, more preferably 1 to 6 mm in thickness. When the sheet is too thick, the sheet tends to be uneven due to uneven swelling. When the sheet is too thin, molding is difficult.

The width of the sheet is not specifically limited and can be suitably selected according to particular production conditions. The length of the sheet is not specifically limited either and can be suitably selected according to particular production conditions. The sheet may be a continuous sheet as it is continuously molded or the sheet can be cut into a suitable length.

Either a continuous sheet or cut sheet can be continuously irradiated by a microwave. According to the particular purpose, the sheet can be cut into a suitable length after microwave irradiation.

Thus, in one feature of the present invention, the soybean protein raw material mixture thus molded in the shape of a sheet is irradiated by microwave.

A microwave irradiating device for industrial use can be used in the present invention. Normally, the frequency of the microwave is 2450 MHz.

In another feature of the present invention, the desired sheet-like soybean protein foods are prepared by irradiating a sheet of the soybean protein raw material mixture intermittently by a microwave a plurality of times to repeat the swelling and shrinking.

When swollen tissues similar to "aburaage (fried tofu)" are formed by single microwave irradiation according to a conventional method, swelling is started from the peripheral part of a sheet of the molded soybean protein raw material mixture and then swelling extends toward the center thereof like a rice cake. During this stage, drying at the earlier swollen part takes place by microwave irradiation and then the dried part is hardened. Even when the resulting material is cooled, a part is shrunk and a sheet having even thickness cannot be obtained. That is, sheet-like soybean protein foods such as those of the present invention cannot be obtained because swelling is uneven in appearance due to large differences in swelling between parts of the sheet and the degree of swelling is high and cavities are formed therein.

In the present invention, the energy of the microwave is controlled so that the center of a sheet of the soybean protein raw material mixture does not swell like a rice cake by a single irradiation. By irradiating repeatedly, the peripheral part of a sheet of the soybean protein raw material mixture is firstly swollen. Then, upon stopping the microwave irradiation, the peripheral part of the sheet shrinks. By the next microwave irradiation, swelling extends gradually from the peripheral part toward the portion around the center of the sheet. Then, upon stopping the microwave irradiation, the swollen part which has extended toward the portion around the center of the sheet shrinks. By subsequent microwave irradiation, swelling extends from the peripheral part to the center of the sheet. Then, upon stopping the microwave irradiation, shrinking occurs to give a sheet-like soybean protein food which has an almost even thickness. Since the energy of the microwave irradiation is controlled so that a sheet of the soybean protein raw material mixture cannot swell completely by a single irradiation, small swelling and shrinking can be repeated whilst preventing swelling like a rice cake, which makes the production of a sheet-like soybean protein food having an even thickness possible.

With a view to heating history, it is suitable to repeat irradiation at least three times. The energy of the microwave per single irradiation should be lower than that which can swell a sheet of the soybean protein raw material mixture completely, but enough to swell at least a portion (peripheral part) of the sheet. Normally, the temperature of the sheet should be 100°C or higher for its swelling under atmospheric pressure.

When the number of the intermittent irradiation cycles is too small, only the peripheral part of a sheet of the soybean protein raw material mixture swells without swelling of the center part and the sheet becomes half-cooked. If the energy of the microwave is high enough to swell the entire sheet by a single irradiation, as described above, the center of the sheet swells like a rice cake and the surface is dried and hardened. Even when such a sheet is cooled, sufficient shrinking does not occur and cavities form therein, which results in uneven thickness. On the other hand, when the energy is insufficient to swell the peripheral part of a sheet of the soybean protein raw material mixture, swelling of the sheet cannot take place even by irradiation many times.

The intermittent microwave irradiation of the present invention can be carried out by either a batch process or a continuous process.

When a batch process is carried out, the cycle of an irradiation step and an interruption step can be repeated. The periods of the irradiation step and the interruption step can be suitably selected.

In a continuous process, for example, when a tunnel type irradiating device is used, irradiation can be carried out intermittently by providing a microwave irradiating zone and a irradiation interrupting zone alternately.

The sheet-like soybean protein foods thus prepared have slightly swollen appearances, even thickness, and fine porous internal structures.

In general, when swelling is effected by frying in oil or a single irradiation, inner cavities, large swelling and uneven thickness are caused. However, the sheet-like soybean protein foods of the present invention have fine porous internal structures, slight swelling and even thickness.

In the sheet-like soybean protein foods of the present invention, the pore size of the fine porous structure is almost even. The pore size can be smaller, as the irradiation energy of a microwave is lower and the number of irradiation cycles is increased. Normally, the average pore diameter can be 2 mm to 0.05 mm, preferably 1.5 mm to 0.1 mm, more preferably 1 mm to 0.1 mm.

The thickness of the sheet-like soybean protein foods of the present invention is almost even because a fine porous structure forms the inner tissues without minimizing formation of inside cavities by repetition of uniform and small swelling and shrinking using intermittent microwave irradiation. The swelling can be carried out to such a small degree that, for example, when the original thickness of the sheet of the soybean protein raw material mixture is 5 mm, the thickness of the foods obtained should be not more than 1.6 times (8 mm or less), preferably less than 1.4 times (7 mm or less), more preferably 1.3 times (6.5 mm or less) as thick as the original thickness of the sheet. In the case of "aburaage (fried soybean curd)" prepared from a sheet of raw soybean curd of 5 mm in thickness, normally, the sheet is swollen 2 to 3 times (10 to 15 mm) or more. In addition, there is a difference in the degree of swelling between the peripheral and center parts and the thickness is uneven. Although the internal structure of "aburaage" could be said to be a network structure, its openings are large and a cavity structure is present as seen in "sushiage (aburaage used for "sushi")".

The sheet-like soybean protein foods of the present invention have a more flexible and softer mouth feel and they have relatively large strength compared with conventional "aburaage". In addition, when the sheet-like soybean protein foods of the present invention are cooked in a seasoning liquid, the desired taste can readily be given.

By utilizing these properties, the sheet-like soybean protein foods of the present invention can be widely used, for example, for cooked foods, raw materials for instant foods and daily dishes.

The sheet-like soybean protein foods of the present invention can be marketed and stored, for example, in the form of chilled foods, retort foods and canned foods.

The following Examples and Comparative Examples further illustrate the present invention in detail. However, they are not to be construed to limit the scope of the present invention. In the Examples and Comparative Examples, all the parts and percents are by weight unless otherwise stated.

### Example 1 and Comparative Example 1

Isolated soybean protein [New Fujipro E (manufactured by Fuji Oil Co., Ltd.), 100 parts], white screwed soybean oil (100 parts), casein (1.2 parts) and water (360 parts) were mixed and kneaded to obtain a soybean protein raw material mixture. The mixture was molded into a sheet having 80 mm width and 5 mm thickness by continuous extrusion molding. The sheet thus continuously extruded was cut into respective sheet materials each of which were 80 mm in length. The weight of each sheet thus obtained was about 30 g.

Then, the respective sheets of soybean protein raw material mixture were irradiated by microwave (frequency was 2450 MHz) as shown in Table 1 using an electronic cooker (Hi-Cooker RE-122 manufactured by Sharp Corp.).

The total irradiation period (irradiation history time) was 80 sec in each case. In Example 1, the irradiation was repeated intermittently to swell and shrink the sheet, repeatedly, while the irradiation was carried out once or twice in the Comparative Example 1. The conditions of the irradiation are shown in Table 1. The thickness of the sheet-like soybean protein foods obtained are also shown in Table 1. As for the thickness, the ranges between the minimum thickness and the maximum thickness are also shown in Table 1.

**Table 1**

| | Comparative Example 1 | | Example 1 | |
|---|---|---|---|---|
| | a | b | No.1 | No.2 |
| Irradiation time (sec.) | 80 | 40 | 20 | 10 |
| Interruption time (sec.) | - | 20 | 10 | 10 |
| Number of repetitions | x 1 | x 2 | x 4 | x 8 |
| Total irradiation time (sec.) | 80 | 80 | 80 | 80 |
| Thickness (mm) | 8-12 | 7-10 | 5-6 | 5-6 |

Appearance and inner tissue of the sheet-like soybean protein foods obtained under the conditions shown in Table 1 were evaluated.

The product of Comparative Example 1-a was swollen to a large extent in appearance and the maximum swelling was about 2.4 times as thick as the original thickness of the sheet of the soybean protein raw material mixture. The thickness was uneven and the inside was hollow. Its appearance and the inner tissues were similar to those obtained by conventional frying. In addition, the product of Comparative Example 1-a was stiff and not flexible.

The product of Comparative Example 1-b was less swollen than that of Comparative Example 1-a. The maximum thickness was about twice the original thickness of the sheet and was thinner than that of Comparative Example 1-a. However, the inner tissue was somewhat hollow and the thickness was somewhat uneven.

The product of Example 1-No. 1 was less swollen in appearance than those from Comparative Example 1-a and b, and the maximum swelling was about 1.2 times as thick as the original thickness of the sheet. The thickness was uniform and the swollen appearance was prevented.

There were fine porous structures inside the product of Example 1-No. 1, and the pore size was fine and almost uniform (less than about 1.5 mm). The product of Example 1-No. 1 was more flexible than those of Comparative Example 1-a and b.

The appearance of the product from Example 1-No. 2 was almost the same as that of Example 1-No. 1. The inner tissue was composed of fine pores (less than about 1 mm). The flexibility was also excellent.

Then, the products obtained in Comparative Example 1 and Example 1 were cut into rectangles and were put into a boiling seasoning liquid having the composition as described below. The liquid was again boiled and then it was cooked gently for 10 minutes. After stopping the heating, the products were taken out. Permeation of the seasoning liquid and mouth feel were estimated.

### Composition of the seasoning liquid

| Component | Parts |
|---|---|
| Dense soya sauce | 80 |
| "Hon-mirin (brewed sweet seasoning)" | 50 |
| Sugar | 13 |
| Aroma-stock "katsuobushi (flaked dried bonito)" | 14 |
| Aroma-stock "kombu (sea tangle)" | 3 |
| Water | 840 |

### Results of the estimation

The seasoning liquid did not permeate uniformly into the sheet-like soybean protein foods obtained in Comparative Example 1-a. Its mouth feel was still hard.

In the product of Comparative Example 1-b, although the seasoning liquid permeated relatively, the permeation was insufficient and mouth feel was still hard.

The seasoning liquid permeated into the product of Example 1-No. 1 more sufficiently and uniformly than the products of Comparative Example 1-a and b. The taste of the product from Example 1-No. 1 was better and the mouth feel was less hard and more flexible than the products of Comparative Example 1-a and b.

The seasoning liquid permeated the product of Example 1-No. 2 much more sufficiently and uniformly than the product from Example 1-No. 1. The taste of the product of Example 1-No. 2 was much better and the mouth feel was similar to, or somewhat more flexible and softer than the product of Example 1-No. 1.

### Example 2 and Comparative Example 2

Although the total irradiation period was constant in Example 1, in this example, each single irradiation period was constant, while the number of irradiation times was varied to change the irradiation history.

The raw materials, the preparation of a sheet of the soybean protein raw material mixture, the size of the molded sheet and its weight, and the microwave irradiating device were the same as those in Example 1.

The irradiation was carried out by repeating a cycle of an irradiation step of 10 minutes to swell the sheet and then an interruption step of 10 min to shrink the sheet.

The results are shown in Table 2. The thickness of the sheet-like soybean protein foods obtained are also shown in Table 2.

**Table 2**

| | Comparative Example 2 | | | Example 2 | | | |
|---|---|---|---|---|---|---|---|
| | c | d | e | No.3 | No.4 | No.5 | No.6 |
| Irradiation time (sec.) | 10 | 10 | 10 | 10 | 10 | 10 | 10 |
| Number of irradiations | x1 | x2 | x4 | x6 | x8 | x10 | x12 |
| Irradiation history (sec.) | 10 | 20 | 40 | 60 | 80 | 100 | 120 |
| Thickness (mm) | 5 | 5 | 5 | 5-6 | 5-6 | 5-6 | 6-7 |

Very small swellings were found in the appearance of the products of Comparative Example 2-c, d and e and Example 2-No. 3, No. 4 and No. 5 after microwave irradiation. Although the product of Comparative Example 2-No. 6 swelled to some extent, the difference of swelling was quite small. This was the result of the longer heat history due to the long total irradiation time rather than the larger number of irradiations.

The insides of the products of Comparative Example 2-c, d and e were half-cooked and porous internal structures were not formed sufficiently because of the insufficient heat history. On the other hand, fine porous structures (fine opening tissues of less than about 1 mm) were formed in the products of Example 2-No. 3 and No. 4. Because of the long total irradiation time and the long heat history, the sizes of inner porous structures of the products of Example 2-No. 5 and No. 6 tended to be somewhat larger. However, the pore size was small (less than about 1.5 mm).

According to the same method as in Example 1, the permeation by seasoning liquid was estimated.

The seasoning liquid permeated the products of Comparative Example 2-c,d and e insufficiently. Their tastes were not good and their mouth feel was half-cooked, fragile and not flexible at all.

The seasoning liquid permeated the products of Example 2-No. 3, No. 4, No. 5 and No. 6 sufficiently and uniformly. Their tastes were excellent, and their mouth feel was flexible and soft.

Water contents of the sheet-like soybean protein foods used were 68.0% (c), 66.2% (d), 64.0% (e), 60.4% (No. 3), 55.0% (No. 4), 48.1% (No. 5) and 38.0% (No. 7). The foods obtained from the present invention had suitable water contents and gave flexible and soft mouth feel.

As described hereinabove, according to the present invention, sheet-like soybean protein foods having fine porous structures therein can be obtained. The sheet-like soybean protein foods had considerable strength, flexibility and soft mouth feel. When the sheet-like soybean protein foods are boiled in seasoning liquids, the tastes of the seasonings readily permeate them.

## Claims

1. A process for preparing sheet-like soybean protein foods which comprises molding a soybean protein raw material mixture into a sheet and irradiating it intermittently by microwave.

2. A process as claimed in claim 1, wherein the irradiation is carried out at least three times.

3. A process as claimed in claim 1 or claim 2, wherein the soybean protein raw material mixture is a hydrate of soybean proteins and contains 2.5 to 6 parts by weight of water per one part by weight of soybean protein.

4. A process as claimed in claim 1 or claim 2, wherein the soybean protein raw material mixture is an emulsion of soybean proteins and contains 2.5 to 6 parts by weight of water and 0.1 to 2 parts by weight of oil per one part by weight of soybean proteins.

5. A process as claimed in any preceding claim, wherein the molding is carried out by extrusion molding.

6. A protein as claimed in any preceding claim, wherein the soybean protein raw material mixture is molded into a sheet of 0.1 to 20 mm thickness.

7. A process as claimed in any preceding claim, wherein the microwave irradiation is carried out in such a manner that the energy of the microwave per single irradiation is lower than that which can swell a sheet of the soybean protein raw material mixture completely, but enough to swell at least a peripheral part of the sheet.

## Patentansprüche

1. Verfahren zur Herstellung von folienartigen Sojaprotein-Lebensmitteln, das das Formen einer Sojaprotein-Ausgangsmaterialmischung zu einer Folie und intermittierendes Bestrahlen derselben durch Mikrowellen umfaßt.

2. Verfahren nach Anspruch 1, wobei die Bestrahlung mindestens dreimal durchgeführt wird.

3. Verfahren nach Anspruch 1 oder Anspruch 2, wobei die Sojaprotein-Ausgangsmaterialmischung ein Hydrat von Sojaproteinen ist und 2,5 bis 6 Gew.-Teile Wasser pro 1 Gew.-Teil Sojaprotein enthält.

4. Verfahren nach Anspruch 1 oder Anspruch 2, wobei die Sojaprotein-Ausgangsmaterialmischung eine Emulsion von Sojaproteinen ist und 2,5 bis 6 Gew.-Teile Wasser und 0,1 bis 2 Gew.-Teile Öl je 1 Gew.-Teil Sojaprotein enthält.

5. Verfahren nach einem der vorangehenden Ansprüche, wobei das Formen durch Extrudieren durchgeführt wird.

6. Protein nach einem der vorangehenden Ansprüche, wobei die Sojaprotein-Rohmaterialmischung zu einer Folie mit einer Dicke von 0,1 bis 20 mm geformt wird.

7. Verfahren nach einem der vorangehenden Ansprüche, wobei die Bestrahlung durch Mikrowellen in einer solchen Art durchgeführt wird, daß die Energie der Mikrowellen pro einzelner Bestrahlung niedriger ist als die, die eine Folie der Sojaprotein-Ausgangsmaterialmischung komplett aufzuquellen vermag, aber ausreichend, um zumindest einen peripheren Bereich der Folie aufzuquellen.

## Revendications

1. Procédé de préparation d'aliments à base de protéines de soya en forme de feuille, caractérisé en ce que l'on moule un mélange de matières premières à base de protéines de soya en une feuille et on l'irradie de manière intermittente par des micro-ondes.

2. Procédé suivant la revendication 1, caractérisé en ce que l'on entreprend l'irradiation au moins trois fois.

3. Procédé suivant la revendication 1 ou la revendication 2, caractérisé en ce que le mélange de matières premières à base de protéines de soya est un hydrate de protéines de soya et contient de 2,5 à 6 parties en poids d'eau pour une partie en poids de protéines de soya.

4. Procédé suivant la revendication 1 ou la revendication 2, caractérisé en ce que le mélange de matières premières à base de protéines de soya est une émulsion de protéines de soya et contient de 2,5 à 6 parties en poids d'eau et de 0,1 à 2 parties en poids d'huile pour une partie en poids de protéines de soya.

5. Procédé suivant l'une quelconque des revendications précédentes, caractérisé en ce que l'on entreprend le moulage par moulage par extrusion.

6. Protéines suivant l'une quelconque des revendications précédentes, caractérisées en ce que le mélange de matières premières à base de protéines de soya est moulé en une feuille d'une épaisseur de 0,1 à 20 mm.

7. Procédé suivant l'une quelconque des revendications précédentes, caractérisé en ce que l'on entreprend l'irradiation par des micro-ondes en une manière telle que l'énergie des micro-ondes par irradiation unique est inférieure à celle qui peut faire gonfler totalement une feuille du mélange des matières premières à base de protéines de soya, mais suffisante pour faire gonfler au moins une partie périphérique de la feuille.
